# EUROPÄISCHE PATENTSCHRIFT

(11) **EP 4 141 598 B1**
(45) Veröffentlichungstag und Bekanntmachung des Hinweises auf die Patenterteilung: **11.02.2026**
(21) Anmeldenummer: 22188459.6
(22) Anmeldetag: 03.08.2022
(51) Int. Cl.: G05D 1/00

(54) **VERFAHREN UND SYSTEM ZUM EINRICHTEN EINER ROBOTISCHEN UND/ODER ASSISTIERENDEN SYSTEMEINHEIT EINES FLURFÖRDERZEUGS**
METHOD AND SYSTEM FOR SETTING UP A ROBOTIC AND / OR ASSISTING SYSTEM UNIT OF AN INDUSTRIAL TRUCK
PROCÉDÉ ET SYSTÈME D'INSTAURATION D'UNE UNITÉ DE SYSTÈME ROBOTIQUE ET/OU D'ASSISTANCE D'UN CHARIOT DE MANUTENTION

(30) Priorität: 23.08.2021 DE 102021121766
(43) Veröffentlichungstag der Anmeldung: 01.03.2023
(73) Patentinhaber: STILL GmbH, 22113 Hamburg (DE)
(72) Erfinder: Schüthe, Dennis, 21255 Tostedt (DE); Abel, Bengt, 21335 Lüneburg (DE); Bakr, Mohamed, 21073 Hamburg (DE)
(74) Vertreter: Patentship Patentanwaltgesellschaft

(56) Entgegenhaltungen:
- EP-A1- 3 686 704
- WO-A1-2019/173396
- US-A1- 2020 168 002
- US-A1- 2020 198 141
- US-A1- 2020 319 613

## Beschreibung

Die Erfindung betrifft ein Verfahren zum Einrichten einer robotischen und/oder assistierenden Systemeinheit eines Flurförderzeugs für einen autonomen und/oder teilautomatisierten Betrieb des Flurförderzeugs bei der Erstinbetriebnahme in einer neuen Arbeitsumgebung.

Außerdem betrifft die Erfindung ein System zur Durchführung des Verfahrens.

Nach dem derzeitigen Stand der Technik müssen robotische und/oder assistierende Systemeinheiten von autonomen oder teilautomatisierten Flurförderzeugen bei der Erstinbetriebnahme in einer Arbeitsumgebung entweder durch eine CAD-ähnliche Software oder durch direktes Einlernen ("Einteachen") in der realen Arbeitsumgebung eingerichtet werden.

Bei der CAD-ähnlichen Software müssen Karten der Arbeitsumgebung hinterlegt werden, in denen dann die Fahrwege und Lagerpositionen des Flurförderzeugs markiert werden. Diese Schritte sind oft sehr aufwendig. Da sich die Arbeitsumgebung oft ändert, ist das Kartenmaterial dann auch veraltet. Häufig gibt es auch gar kein Kartenmaterial und es muss erst erstellt werden, bevor die robotische und/oder assistierende Systemeinheit des Flurförderzeugs eingerichtet werden kann.

Robotische und/oder assistierende Systemeinheiten von Flurförderzeugen, die ihre Karte der Arbeitsumgebung selbst erstellen, können auch eingelernt, also "eingeteacht" werden. Hierzu fährt man mit dem Flurförderzeug durch die Arbeitsumgebung, in der es später fahren sollen, herum. Wichtige Positionen werden dann mittels Knopfdruck gespeichert und können später wieder angefahren werden. Jede Position, die angefahren werden soll, muss einmal manuell angefahren werden.

Es gibt auch Mischsysteme, in denen die robotische und/oder assistierende Systemeinheit erst die Karte der Arbeitsumgebung erstellt und diese dann in der CAD-ähnlichen Software überarbeitet und mit logischen Informationen angereichert wird.

Das Einrichten von robotischen und/oder assistierenden Systemeinheiten von Flurförderzeugen ist bisher nur spezialisierten Fachkräften vorbehalten. Außerdem ist das Einrichten von robotischen und/oder assistierenden Systemeinheiten von Flurförderzeugen bisher sehr langwierig und führt damit zu hohen Kosten. Wenn sich die Arbeitsumgebung ändert, muss das System wieder durch einen Spezialisten geändert werden.

Die EP 3 686 704 A1 offenbart ein Verfahren zum Erzeugen einer Darstellung und ein System zum Anlernen eines autonomen Geräts, wobei der Betrieb des autonomen Geräts auf der Darstellung basiert.

Die US 2020/319613 A1 offenbart einen automatisierten sich selbst hebenden Gabelstapler.

Der vorliegenden Erfindung liegt die Aufgabe zugrunde, ein Verfahren der genannten Art sowie ein System zur Durchführung des Verfahrens so auszugestalten, dass das Einrichten der robotischen und/oder assistierenden Systemeinheit vereinfacht wird.

Die Erfindung ist in Anspruch 1 und Anspruch 7 definiert.

Diese Aufgabe wird verfahrensseitig durch ein Verfahren zum Einrichten einer robotischen und/oder assistierenden Systemeinheit eines Flurförderzeugs für einen autonomen und/oder teilautomatisierten Betrieb des Flurförderzeugs bei der Erstinbetriebnahme in einer neuen Arbeitsumgebung gelöst, wobei eine Betriebsperson mit einer AR-Einrichtung zur computergestützten Erweiterung der Realitätswahrnehmung (Augmented Reality Device) die Arbeitsumgebung aufnimmt und Merkmale in der von der AR-Einrichtung aufgenommenen Arbeitsumgebung virtuell kennzeichnet, wobei von der Bedienperson als Merkmale Lagerbereiche, in denen Ware durch das Flurförderzeug aufgenommen und/oder abgegeben werden soll, in der von der AR-Einrichtung aufgenommenen Arbeitsumgebung virtuell gekennzeichnet werden, und dass Informationen über die Aufnahme der Arbeitsumgebung mit den virtuellen Kennzeichnungen an das Flurförderzeug übermittelt werden und die Informationen in der robotischen und/oder assistierenden Systemeinheit des Flurförderzeugs beim autonomen und/oder teilautomatisierten Betrieb in der Arbeitsumgebung verwendet werden.

Unter erweiterter Realität (englisch: augmented reality) kann insbesondere ganz allgemein eine computergestützte Erweiterung der Realitätswahrnehmung verstanden werden. In der Regel kann unter erweiterter Realität insbesondere die visuelle Darstellung von Informationen verstanden werden, also die Ergänzung von Bildern oder Videos mit computergenerierten Zusatzinformationen oder virtuellen Objekten mittels Einblendung und/oder Überlagerung.

Unter einer AR-Einrichtung kann vorzugsweise eine Einrichtung mit den technischen Bestandteilen verstanden werden, die nötig sind, um eine Augmented-Reality-Anwendung aufzubauen, also zum Beispiel Kamera, Trackinggeräte, Unterstützungssoftware etc..

Vorzugsweise wird die Aufnahme der Arbeitsumgebung mit den virtuellen Kennzeichnungen in einer Datenverarbeitungseinrichtung der AR-Einrichtung digital verarbeitet und/oder gespeichert. Somit können die Informationen über die Aufnahme der Arbeitsumgebung mit den virtuellen Kennzeichnungen als digitale Daten über eine Datenverbindung, insbesondere eine drahtlose Datenverbindung, an eine Datenverarbeitungseinrichtung der robotischen und/oder assistierenden Systemeinheit des Flurförderzeugs übermittelt werden. Anschließend kann die Datenverarbeitungseinrichtung der robotischen und/oder assistierenden Systemeinheit des Flurförderzeugs die digitalen Daten verarbeiten und daraus Arbeitsanweisungen an eine Fahrzeugsteuerung des Flurförderzeugs erstellen.

Durch den Einsatz der Augmented Reality Technologie kann die Einrichtung von robotischen Systemen erheblich vereinfacht werden. Statt Pfade, Verkehrsregeln und Positionen in einer aufgenommenen oder gezeichneten Karte einzutragen, kann die Betriebsperson diese Merkmale über die Augmented Reality Technologie direkt in der aufgezeichneten Arbeitsumgebung, die insbesondere die reale Umgebung wiedergibt, kennzeichnen. Auf diese Weise kann die Betriebsperson zum Beispiel Pfade für das Flurförderzeug vorgeben. Dabei ermöglicht es die AR-Einrichtung der Betriebsperson, gleichzeitig die reale Arbeitsumgebung und zusätzlich virtuelle Augmentierungen, zum Beispiel Hologramme, zu sehen. Nun kann die Betriebsperson beispielsweise mit einem virtuellen Klebeband eine virtuelle Linie auf den Boden zeichnen. Dieser Linie folgt dann das Flurförderzeug.

Gemäß einer vorteilhaften Ausgestaltungsform der Erfindung werden als Merkmale bevorzugt Positionen und/oder Linien und/oder Bereiche in der von der AR-Einrichtung aufgenommenen Arbeitsumgebung virtuell gekennzeichnet.

Dabei können insbesondere Fahrwege für das Flurförderzeug in der von der AR-Einrichtung aufgenommenen Arbeitsumgebung virtuell gekennzeichnet werden.

Auf diese Weise werden auch Lagerbereiche, in denen eine Ware durch das Flurförderzeug aufgenommen und/oder abgegeben werden soll, in der von der AR-Einrichtung aufgenommenen Arbeitsumgebung virtuell gekennzeichnet.

Gemäß einer bevorzugten Weiterbildung des Erfindungsgedankens ist vorgesehen, dass als Merkmale Bereiche mit Fahrvorschriften für das Flurförderzeug, insbesondere Bereiche mit Einbahnstraßen und/oder geschwindigkeitsbeschränkte Bereiche und/oder Bereiche mit Halteverboten, in der von der AR-Einrichtung aufgenommenen Arbeitsumgebung virtuell gekennzeichnet werden.

Von besonderem Vorteil ist, wenn die AR-Einrichtung eine zweidimensionale oder dreidimensionale Umgebungskarte erstellt, in der sie sich selbst lokalisiert. Diese zweidimensionale oder dreidimensionale Umgebungskarte kann dann mit den logischen, annotierten virtuellen Kennzeichnungen dem Flurförderzeug zur Verfügung gestellt werden.

Die Erfindung betrifft ferner ein System zur Durchführung des hierin beschriebenen Verfahrens mit einer robotischen und/oder assistierenden Systemeinheit eines Flurförderzeugs für einen autonomen und/oder teilautomatisierten Betrieb des Flurförderzeugs in einer Arbeitsumgebung. Das System umfasst eine, von einer Betriebsperson tragbare, AR-Einrichtung zur computergestützten Erweiterung der Realitätswahrnehmung (Augmented Reality Device) , wobei die AR-Einrichtung
- eine Erfassungseinheit umfasst, die ausgebildet ist, um die Arbeitsumgebung aufzunehmen,
- eine Benutzerschnittstelle umfasst, die ausgebildet ist, um Merkmale in der von der Erfassungseinheit der AR-Einrichtung aufgenommenen Arbeitsumgebung virtuell zu kennzeichnen,
- und eine Kommunikationsschnittstelle umfasst, über welche die AR-Einrichtung mit der robotischen und/oder assistierenden Systemeinheit eines Flurförderzeugs verbindbar ist,
wobei die AR-Einrichtung dazu eingerichtet ist, über die Kommunikationsschnittstelle Daten bereitzustellen und an die robotische und/oder assistierende Systemeinheit eines Flurförderzeugs zu übermitteln, die Informationen über eine Aufnahme der Arbeitsumgebung mit einer virtuellen Kennzeichnung enthalten, so dass die robotische und/oder assistierende Systemeinheit des Flurförderzeugs mit den Informationen eingerichtet werden kann.

Bei dem System wird die gestellte Aufgabe folglich dadurch gelöst, dass eine, von einer Betriebsperson tragbare, AR-Einrichtung zur computergestützten Erweiterung der Realitätswahrnehmung (Augmented Reality Device) vorgesehen ist, mit der die Betriebsperson mittels der Erfassungseinheit die Arbeitsumgebung aufnehmen kann und in der die Betriebsperson mittels der Benutzerschnittstelle Merkmale in der von der AR-Einrichtung aufgenommenen Arbeitsumgebung virtuell kennzeichnen kann, wobei die AR-Einrichtung über eine Kommunikationsschnittstelle verfügt, über welche die AR-Einrichtung mit der robotischen und/oder assistierenden Systemeinheit des Flurförderzeugs verbindbar ist, so dass Informationen über die Aufnahme der Arbeitsumgebung mit den virtuellen Kennzeichnungen an das Flurförderzeug übermittelt werden können, und die robotische und/oder assistierende Systemeinheit des Flurförderzeugs mit den Informationen für den autonomen und/oder teilautomatisierten Betrieb in der Arbeitsumgebung einrichtbar ist.

Unter tragbar kann insbesondere verstanden werden, dass die AR-Einrichtung derart ausgebildet ist, dass diese von einer Bedienperson getragen werden kann. Vorzugweise kann die AR-Einrichtung Abmessungen und/oder ein Gewicht aufweisen, um von einer Bedienperson getragen werden zu können. Insbesondere bevorzugt kann die AR-Einheit an einer Bedienperson angeordnet und/oder befestigt werden. Vorzugweise kann die AR-Einheit von der Bedienperson mit dessen Händen, vorzugsweise mit einer Hand, getragen werden oder vergleichbar einer Brille oder eines Stirnbandes auf den Kopf aufgesetzt und mit dem Kopf getragen werden. Vorzugsweise kann die AR-Einheit mindestens eine Tragefläche und/oder mindestens einen Griff aufweisen, um von der Bedienperson getragen werden zu können. Eine Tragefläche kann insbesondere jeder Teil der Oberfläche sein, die ausgestaltet ist, um auf einer Hand aufzuliegen oder ein festhalten durch eine Hand erlaub

Insbesondere kann die Kommunikationsschnittstelle der AR-Einrichtung mit einer Kommunikationsschnittstelle der robotischen und/oder assistierenden Systemeinheit des Flurförderzeugs in Wirkverbindung gebracht werden, so dass Informationen über die Aufnahme der Arbeitsumgebung mit den virtuellen Kennzeichnungen an das Flurförderzeug übermittelt werden können, und die robotische und/oder assistierende Systemeinheit des Flurförderzeugs mit den Informationen für den autonomen und/oder teilautomatisierten Betrieb in der Arbeitsumgebung einrichtbar ist.

Die Kommunikationsschnittstelle, über welche die AR-Einrichtung mit der robotischen und/oder assistierenden Systemeinheit des Flurförderzeugs verbindbar ist, stellt insbesondere eine signaltechnische Kopplung der AR-Einrichtung mit der robotischen und/oder assistierenden Systemeinheit des Flurförderzeugs her, die eine kabelgebundene Verbindung oder bevorzugt eine drahtlose Verbindung umfasst.

Dabei verfügt die Erfassungseinheit insbesondere zweckmäßigerweise über eine Sensorik zur Erfassung der Arbeitsumgebung und eine mit der Sensorik in Wirkverbindung stehende Datenverarbeitungseinrichtung zur Auswertung der Sensordaten. Die Benutzerschnittstelle verfügt insbesondere über eine Anzeigevorrichtung mit einer Eingabefunktion, die eingerichtet ist, um die von der Sensorik aufgenommene Arbeitsumgebung anzuzeigen und in die erfasste Arbeitsumgebung Merkmale durch die Bedienperson einzugeben. Die Datenverarbeitungseinrichtung ist insbesondere ausgebildet, über die Kommunikationsschnittstelle der AR-Einrichtung und eine Kommunikationsschnittstelle der robotischen und/oder assistierenden Systemeinheit eine signaltechnische Kopplung zur Datenübermittlung mit einer Datenverarbeitungseinrichtung der robotischen und/oder assistierenden Systemeinheit des Flurförderzeugs herzustellen und Daten bereitzustellen und an die Datenverarbeitungseinheit der robotischen und/oder assistierenden Systemeinheit des Flurförderzeugs zu übermitteln, welche Daten Informationen über eine Aufnahme der Arbeitsumgebung mit den eingegebenen Merkmalen enthalten, so dass die Datenverarbeitungseinrichtung der robotischen und/oder assistierenden Systemeinheit des Flurförderzeugs mit den Informationen eingerichtet werden kann.

Die Benutzerschnittstelle mit der Anzeigevorrichtung kann der Betriebsperson die von der Sensorik erfasste Arbeitsumgebung anzeigen. Außerdem kann die Betriebsperson die gewünschten Merkmale mittels der Eingabefunktion der Benutzerschnittstelle in die erfasste Arbeitsumgebung eingeben. Sowohl die Datenverarbeitungseinrichtung der AR-Einrichtung als auch die Datenverarbeitungseinrichtung der robotischen und/oder assistierenden Systemeinheit des Flurförderzeugs verfügen jeweils über eine Kommunikationsschnittstelle zur Datenübermittlung. Somit kann die Datenverarbeitungseinrichtung der robotischen und/oder assistierenden Systemeinheit des Flurförderzeugs durch die übermittelten Daten eingerichtet werden.

Die Kommunikationsschnittstelle der AR-Einrichtung und gegebenenfalls die Kommunikationsschnittstelle der robotischen und/oder assistierenden Systemeinheit des Flurförderzeugs sind vorzugsweise als Funkschnittstellen ausgebildet, so dass die AR-Einrichtung die Daten per Funk an das Flurförderzeug übertragen kann. Alternativ können die Kommunikationsschnittstellen über ein Verbindungskabel miteinander verbunden werden. Hierzu kann die AR-Einrichtung beispielsweise am Flurförderzeug integrierbar sein oder am Flurförderzeug kann eine Datensteckdose vorgesehen werden, so dass die Daten von der AR-Einrichtung an die Datenverarbeitungseinheit des Flurförderzeugs über eine Leitung verschickt werden können.

In einer besonders bevorzugten Ausgestaltung der Erfindung umfasst die Sensorik eine 2D-Kamera oder eine 3D-Kamera, so dass eine zweidimensionale oder dreidimensionale Umgebungskarte erstellt werden kann. In dieser Umgebungskarte kann sich die AR-Einrichtung selbst lokalisieren. Über die Schnittstellen kann die zweidimensionale oder dreidimensionale Umgebungskarte mit den eingegebenen Merkmalen an das Flurförderzeug übermittelt werden.

Die Anzeigevorrichtung umfasst zweckmäßigerweise einen berührungsempfindlichen Bildschirm, insbesondere ein Touch-Display. Somit können die Merkmale auf besonders bequeme Weise mit den Fingern der Betriebsperson direkt in die angezeigte Arbeitsumgebung eingegeben werden.

In einer besonders praxisgerechten bevorzugten Realisierung der Erfindung ist die AR-Einrichtung als Smartphone oder Tablet oder Mixed-Reality-Brille ausgebildet. Dabei kann jedes handelsübliche Smartphone oder Tablet mit einer geeigneten Applikation ausgestattet werden, um die Funktionen der Augmented Reality Technologie zu ermöglichen. Eine Mixed-Reality-Brille, die auch als Hololense bezeichnet wird, ist vorzugsweise eine am Kopf der Bedienperson tragbare brillenartige Anzeigeeinheit, die als Sensorik integrierte Kameras hat, beispielsweise eine oder mehrere 2D- oder 3D-Kameras, und eine 2D- oder 3D-Karte erstellen kann. Mit einer derartigen Mixed-Reality-Brille kann die Bedienperson mit der Hand an die Stelle tippen, wo ein entsprechendes Merkmal, beispielsweise ein Fahrweg oder ähnliches, eingerichtet werden soll. Die Kameras der Mixed-Reality-Brille können vorzugsweise die Handbewegungen detektieren und insbesondere auf die Eingabe reagieren. Ein Vorteil einer derartigen Mixed-Reality-Brille ist, dass die Bedienperson direkt die Umgebung mit den virtuell gekennzeichneten Merkmalen sehen kann und diese ortsfest bleiben.

Ein wesentlicher Vorteil der Erfindung besteht darin, dass durch die interaktive Bedienung in der realen Arbeitsumgebung das Einrichten eines autonomen oder teilautomatisierten Flurförderzeugs bei der Erstinbetriebnahme in einer neuen Arbeitsumgebung wesentlich einfacher und durch nicht spezialisierte Personen durchführbar wird.

Weiterhin wird insbesondere auch kein Kartenmaterial im Voraus benötigt.

Dem Betreiber von Flurförderzeugen kann das Einrichten der autonomen oder teilautomatisierten Flurförderzeuge über verschiedene Wege ermöglicht werden, zum Beispiel als Serviceleistung von einem Techniker, der die AR-Einrichtung zur Verfügung hat, oder als Applikation zum Download für das eigene Smartphone oder Tablet.

Es ist insbesondere auch eine Übertragung der Daten an mehrere Flurförderzeuge gleichzeitig möglich.

Außerdem eignet sich die Erfindung auch für robotisch-assistierende Fahrzeuge, wobei die Einrichtung zum Beispiel in Geschwindigkeitsbereichen, Einbahnstraßen, etc. limitierend auf die Fahrzeugfunktionalität wirken kann.

Weitere Vorteile und Einzelheiten der Erfindung werden exemplarisch anhand der in den schematischen Figuren dargestellten bevorzugten Ausführungsbeispiele näher erläutert. Hierbei zeigen
- Figur 1: ein Flurförderzeug und eine Betriebsperson mit tragbarer AR-Einrichtung und
- Figur 2: eine Abbildung der Arbeitsumgebung mit virtuellen Linien auf einem Bildschirm der AR-Einrichtung.

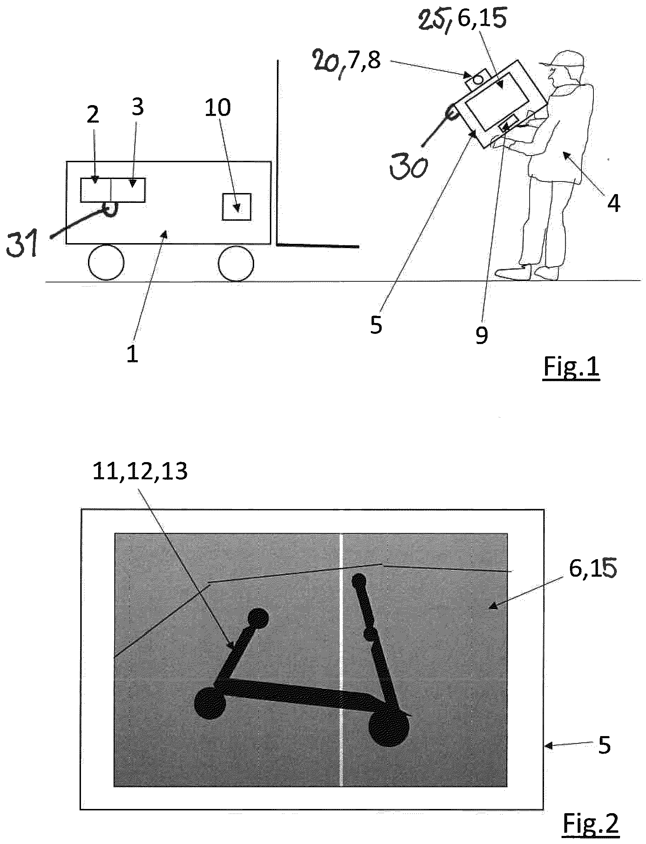

Die Figur 1 zeigt ein autonomes Flurförderzeug 1 mit einer robotischen Systemeinheit 2, die über eine Datenverarbeitungseinrichtung 3 verfügt. Damit sich das autonome Flurförderzeug 1 in einer neuen Arbeitsumgebung zurechtfindet, muss seine robotische Systemeinheit 2 zunächst eingerichtet werden.

Das Einrichten der Systemeinheit 2 erfolgt durch den Einsatz der Augmented Reality Technologie. Hierfür ist eine, von einer Betriebsperson 4 tragbare, AR-Einrichtung 5 vorgesehen. Dabei kann es sich zum Beispiel um ein Smartphone oder Tablet oder eine Mixed-Reality-Brille handeln, auf dem eine Applikation installiert ist, die eine computergestützte Erweiterung der Realitätswahrnehmung bietet.

Die AR-Einrichtung 5 umfasst eine Erfassungseinheit 20, die ausgebildet ist, um die Arbeitsumgebung aufzunehmen. Die Erfassungseinheit 20 umfasst beispielsweise eine Sensorik 7, mit der die Arbeitsumgebung erfasst werden kann, und eine mit der Sensorik 7 in Wirkverbindung stehende Datenerarbeitungseinrichtung 9 zur Auswertung der Sensordaten der Sensorik 7. Die Sensorik 7 umfasst insbesondere eine Kamera 8 oder mehrere Kameras 8.

Die AR-Einrichtung 5 umfasst weiterhin eine Benutzerschnittstelle 25, die ausgebildet ist, um Merkmale 12 in der von der Erfassungseinheit 20 der AR-Einrichtung 5 aufgenommenen Arbeitsumgebung virtuell zu kennzeichnen. Die Benutzerschnittstelle 25 verfügt insbesondere über eine Anzeigevorrichtung 6 mit einer Eingabefunktion, die eingerichtet ist, um die von der Sensorik 7 erfasste Arbeitsumgebung anzuzeigen und in die erfasste Arbeitsumgebung Merkmale 12 durch die Betriebsperson 4 virtuell zu kennzeichnen und einzugeben.

Die AR-Einrichtung 5 umfasst weiterhin eine Kommunikationsschnittstelle 30 über welche die AR-Einrichtung 5 mit der robotischen und/oder assistierenden Systemeinheit 2 des Flurförderzeugs 1 verbindbar ist. Das Flurförderzeug 1 verfügt hierzu bevorzugt über eine weitere Kommunikationsschnittstelle 31, die mit der Systemeinheit 2 bzw. der Datenverarbeitungseinrichtung 3 in Verbindung steht.

Die Benutzerschnittstelle 25 und die Kommunikationsschnittstelle 30 stehen mit der Datenverarbeitungseinrichtung 9 in Verbindung.

Die Aufnahme der Arbeitsumgebung mit den von der Bedienperson 4 vorgenommenen virtuellen Kennzeichnungen werden zweckmäßigerweise in der Datenverarbeitungseinrichtung 9 der AR-Einrichtung 5 digital verarbeitet und/oder gespeichert. Die Informationen über die Aufnahme der Arbeitsumgebung mit den virtuellen Kennzeichnungen können anschließend als digitale Daten über die Kommunikationsschnittstellen 30, 31, die eine Datenverbindung ermöglichen, insbesondere eine drahtlose Datenverbindung, von der AR-Einrichtung 5 an die Datenverarbeitungseinrichtung 3 der robotischen Systemeinheit 2 des Flurförderzeugs 1 übermittelt werden.

Die AR-Einrichtung 5 ist hierzu eingerichtet, über die Kommunikationsschnittstelle 30 Daten bereitzustellen und an die robotische und/oder assistierende Systemeinheit 2 des Flurförderzeugs 1 zu übermitteln, die Informationen über eine Aufnahme der Arbeitsumgebung mit den virtuellen Kennzeichnungen enthalten, so dass die robotische und/oder assistierende Systemeinheit 2 des Flurförderzeugs 1 mit diesen Informationen eingerichtet werden kann.

Bei der Ausführung der AR-Einrichtung 5 als Smartphone oder Tablet ermöglicht die AR-Einrichtung 5 der Betriebsperson 4 gleichzeitig, die aufgenommene, reale Arbeitsumgebung und zusätzlich virtuelle Augmentierungen (Hologramme) auf der Anzeigevorrichtung 6, beispielsweise einem berührungsempfindlichen Bildschirm 15, der AR-Einrichtung 5 zu sehen. Der Bildschirm 15 ist für die Eingabefunktion bevorzugt als Touch-Display ausgebildet, über das die Betriebsperson 4 Merkmale als virtuelle Kennzeichnungen manuell eintragen kann.

Bei der Ausführung der AR-Einrichtung 5 als Mixed-Reality-Brille ermöglicht die AR-Einrichtung 5 der Betriebsperson 4 gleichzeitig, die aufgenommene, reale Arbeitsumgebung und zusätzlich virtuelle Augmentierungen (Hologramme) auf einer Anzeigevorrichtung der Mixed-Reality-Brille zu sehen. Für die Eingabefunktion kann die Bedienperson, die die Mixed-Reality-Brille auf dem Kopf trägt, mit der Hand an eine bestimmte Stelle tippen, um Merkmale als virtuelle Kennzeichnungen manuell in der realen Arbeitsumgebung eintragen zu können. Die Kameras der Mixed-Reality-Brille detektieren die Handbewegungen und reagieren auf die Eingabe.

Beispielsweise kann mit einem virtuellen Klebeband eine virtuelle Linie auf dem Boden als Fahrweg des Flurförderzeugs gekennzeichnet werden. Die Informationen über die von der AR-Einrichtung 5 aufgenommene, reale Arbeitsumgebung und die virtuellen Kennzeichnungen werden in einer Datenverarbeitungseinrichtung 9 der AR-Einrichtung 5 verarbeitet und über die bevorzugt als Funkverbindung ausgebildete Datenverbindung an die Datenverarbeitungseinrichtung 3 der robotischen Systemeinheit 2 des Flurförderzeugs 1 übermittelt.

Von der Bedienperson 4 werden mittels der AR-Einrichtung 5 in der realen Arbeitsumgebung als Merkmale Lagerbereiche als virtuelle Kennzeichnungen manuell eingetragen, an denen das Flurförderzeug 1 Ware aufnehmen oder absetzen soll. Des Weiteren können von der Bedienperson 4 mittels der AR-Einrichtung 5 in der realen Arbeitsumgebung als Merkmale Lagerplätze in der Arbeitsumgebung identifiziert und markiert werden. Darüber hinaus können von der Bedienperson 4 mittels der AR-Einrichtung 5 in der realen Arbeitsumgebung mit den virtuellen Kennzeichnungen Einbahnstraßen eingerichtet werden und/oder geschwindigkeitsreduzierte Bereiche definiert werden und/oder Halteverbote eingegeben werden.

Um sich hierbei selbst zu lokalisieren, erstellt die AR-Einrichtung 5 eine 2D-Karte oder eine 3D-Karte der Arbeitsumgebung, in der die von der Bedienperson manuell eingetragenen virtuellen Kennzeichnungen enthalten sind und die an die Systemeinheit 2 des Flurförderzeugs 1 übermittelt wird.

Die übermittelten Informationen werden in der Datenverarbeitungseinrichtung 3 der robotischen Systemeinheit 2 des Flurförderzeugs 1 verarbeitet und es werden daraus Arbeitsanweisungen an eine Fahrzeugsteuerung 10 des Flurförderzeugs 1 erstellt. Auf diese Weise kann das Flurförderzeug 1 zum Beispiel der gekennzeichneten, virtuellen Linie in der Arbeitsumgebung folgen.

In der Figur 2 ist eine Abbildung der realen Arbeitsumgebung auf der Anzeigevorrichtung 6 der AR-Einrichtung 5 dargestellt. Als virtuelle Kennzeichnungen 13 von Merkmalen 12 wurden Linien 11 von der Betriebsperson 4 manuell in der Arbeitsumgebung eingetragen. Die Informationen über die Arbeitsumgebung mit den virtuellen Linien werden an das Flurförderzeug 1 übermittelt, so dass das Flurförderzeug 1 diesen Linien folgen kann.

## Patentansprüche

1. Verfahren zum Einrichten einer robotischen und/oder assistierenden Systemeinheit (2) eines Flurförderzeugs (1) für einen autonomen und/oder teilautomatisierten Betrieb des Flurförderzeugs (1) bei der Erstinbetriebnahme in einer neuen Arbeitsumgebung, wobei eine Betriebsperson (4) mit einer AR-Einrichtung (5) zur computergestützten Erweiterung der Realitätswahrnehmung (Augmented Reality Device) die Arbeitsumgebung aufnimmt und Merkmale (12) in der von der AR-Einrichtung (5) aufgenommenen Arbeitsumgebung virtuell kennzeichnet, wobei von der Bedienperson (4) als Merkmale (12) Lagerbereiche, in denen Ware durch das Flurförderzeug (1) aufgenommen und/oder abgegeben werden soll, in der von der AR-Einrichtung (5) aufgenommenen Arbeitsumgebung virtuell gekennzeichnet werden, und wobei Informationen über die Aufnahme der Arbeitsumgebung mit den virtuellen Kennzeichnungen (13) an das Flurförderzeug (1) übermittelt werden und die Informationen in der robotischen und/oder assistierenden Systemeinheit (2) des Flurförderzeugs (1) beim autonomen und/oder teilautomatisierten Betrieb in der Arbeitsumgebung verwendet werden.

2. Verfahren nach Anspruch 1, **dadurch gekennzeichnet, dass** die Aufnahme der Arbeitsumgebung mit den virtuellen Kennzeichnungen (13) in einer Datenverarbeitungseinrichtung (9) der AR-Einrichtung (5) digital verarbeitet und/oder gespeichert wird, und die Informationen über die Aufnahme der Arbeitsumgebung mit den virtuellen Kennzeichnungen (13) als digitale Daten über eine Datenverbindung, insbesondere eine drahtlose Datenverbindung, an eine Datenverarbeitungseinrichtung (3) der robotischen und/oder assistierenden Systemeinheit (2) des Flurförderzeugs (1) übermittelt werden, und die Datenverarbeitungseinrichtung (3) der robotischen und/oder assistierenden Systemeinheit (2) des Flurförderzeugs (1) die digitalen Daten verarbeitet und daraus Arbeitsanweisungen an eine Fahrzeugsteuerung (10) des Flurförderzeugs (1) erstellt.

3. Verfahren nach Anspruch 1 oder 2, **dadurch gekennzeichnet, dass** als Merkmale (12) Positionen und/oder Linien (11) und/oder Bereiche in der von der AR-Einrichtung (5) aufgenommenen Arbeitsumgebung virtuell gekennzeichnet werden.

4. Verfahren nach einem der Ansprüche 1 bis 3, **dadurch gekennzeichnet, dass** als Merkmale (12) Fahrwege für das Flurförderzeug (1) in der von der AR-Einrichtung (5) aufgenommenen Arbeitsumgebung virtuell gekennzeichnet werden.

5. Verfahren nach einem der Ansprüche 1 bis 4, **dadurch gekennzeichnet, dass** als Merkmale (12) Bereiche mit Fahrvorschriften für das Flurförderzeug (1), insbesondere Bereiche mit Einbahnstraßen und/oder geschwindigkeitsbeschränkte Bereiche und/oder Bereiche mit Halteverboten, in der von der AR-Einrichtung (5) aufgenommenen Arbeitsumgebung virtuell gekennzeichnet werden.

6. Verfahren nach einem der Ansprüche 1 bis 5, **dadurch gekennzeichnet, dass** die AR-Einrichtung (5) eine zweidimensionale oder dreidimensionale Umgebungskarte erstellt, in der sie sich selbst lokalisiert.

7. System zur Durchführung des Verfahrens nach einem der Ansprüche 1 bis 6 mit einer robotischen und/oder assistierenden Systemeinheit (2) eines Flurförderzeugs (1) für einen autonomen und/oder teilautomatisierten Betrieb des Flurförderzeugs (1) in einer Arbeitsumgebung, wobei eine, von einer Betriebsperson (4) tragbare, AR-Einrichtung (5) zur computergestützten Erweiterung der Realitätswahrnehmung (Augmented Reality Device) vorgesehen ist, umfassend
- eine Erfassungseinheit (20), die ausgebildet ist, um die Arbeitsumgebung aufzunehmen,
- eine Benutzerschnittstelle (25), die ausgebildet ist, um Merkmale (12) in der von der Erfassungseinheit der AR-Einrichtung (5) aufgenommenen Arbeitsumgebung virtuell zu kennzeichnen,
- eine Kommunikationsschnittstelle (30) über welche die AR-Einrichtung (5) mit der robotischen und/oder assistierenden Systemeinheit (2) eines Flurförderzeugs (1) verbindbar ist,
wobei die AR-Einrichtung (5) dazu eingerichtet ist, über die Kommunikationsschnittstelle (30) Daten bereitzustellen und an die robotische und/oder assistierende Systemeinheit (2) eines Flurförderzeugs (1) zu übermitteln, die Informationen über eine Aufnahme der Arbeitsumgebung mit einer virtuellen Kennzeichnung enthalten, so dass die robotische und/oder assistierende Systemeinheit (2) des Flurförderzeugs (1) mit den Informationen eingerichtet werden kann.

8. System nach Anspruch 7, **dadurch gekennzeichnet, dass** die Erfassungseinheit (20) über eine Sensorik (7) zur Erfassung der Arbeitsumgebung und eine mit der Sensorik (7) in Wirkverbindung stehende Datenverarbeitungseinrichtung (9) zur Auswertung der Sensordaten verfügt,
weiter **dadurch gekennzeichnet, dass** die Benutzerschnittstelle (25) über eine Anzeigevorrichtung (6) mit einer Eingabefunktion verfügt, die eingerichtet ist, um die von der Sensorik (7) erfasste Arbeitsumgebung anzuzeigen und in die erfasste Arbeitsumgebung Merkmale (12) durch die Betriebsperson (4) einzugeben, weiter **gekennzeichnet dadurch, dass** die Datenverarbeitungseinrichtung (9) ausgebildet ist, über die Kommunikationsschnittstelle (30) der AR-Einrichtung (5) und eine Kommunikationsschnittstelle (31) der robotischen und/oder assistierenden Systemeinheit (2) eine signaltechnische Kopplung zur Datenübermittlung mit einer Datenverarbeitungseinrichtung (3) der robotischen und/oder assistierenden Systemeinheit (2) des Flurförderzeugs (1) herzustellen und Daten bereitzustellen und an die Datenverarbeitungseinheit (3) der robotischen und/oder assistierenden Systemeinheit (2) des Flurförderzeugs (1) zu übermitteln, die Informationen über eine Aufnahme der Arbeitsumgebung mit den eingegebenen Merkmalen enthalten, so dass die Datenverarbeitungseinrichtung (3) der robotischen und/oder assistierenden Systemeinheit (2) des Flurförderzeugs (1) mit den Informationen eingerichtet werden kann.

9. System nach Anspruch 7 oder 8, **dadurch gekennzeichnet, dass** die Kommunikationsschnittstelle (30) der AR-Einrichtung (5) und/oder gegebenenfalls die Kommunikationsschnittstelle (31) der robotischen und/oder assistierenden Systemeinheit (2) des Flurförderzeugs (1) als Funkschnittstellen ausgebildet sind.

10. System nach einem der Ansprüche 7 bis 9, **dadurch gekennzeichnet, dass** die Sensorik (7) eine 2D-Kamera oder eine 3D-Kamera (8) umfasst.

11. System nach einem der Ansprüche 8 bis 10, **dadurch gekennzeichnet, dass** die Anzeigevorrichtung (6) einen berührungsempfindlichen Bildschirm (15) umfasst.

12. System nach einem der Ansprüche 7 bis 11, **dadurch gekennzeichnet, dass** die AR-Einrichtung (5) als Smartphone oder Tablet oder Mixed-Reality-Brille ausgebildet ist.

## Claims

1. Method for setting up a robotic and/or assistive system unit (2) of an industrial truck (1) for autonomous and/or partially automated operation of the industrial truck (1) during initial commissioning in a new working environment, wherein an operator (4) uses an AR device (5) for computer-aided expansion of the perception of reality (augmented reality device) to capture the working environment and virtually marks features (12) in the working environment captured by the AR device (5), wherein the operator (4) virtually marks storage areas in which goods are intended to be picked up and/or delivered by the industrial truck (1) as features (12) in the working environment captured by the AR device (5), and wherein information about the capture of the working environment comprising the virtual markings (13) is transmitted to the industrial truck (1) and the information is used in the robotic and/or assistive system unit (2) of the industrial truck (1) for autonomous and/or partially automated operation in the working environment.

2. Method according to Claim 1, **characterized in that** the capture of the working environment comprising the virtual markings (13) is digitally processed and/or stored in a data processing device (9) of the AR device (5), and the information about the capture of the working environment comprising the virtual markings (13) is transmitted as digital data via a data connection, in particular a wireless data connection, to a data processing device (3) of the robotic and/or assistive system unit (2) of the industrial truck (1), and the data processing device (3) of the robotic and/or assistive system unit (2) of the industrial truck (1) processes the digital data and creates work instructions to a vehicle controller (10) of the industrial truck (1) therefrom.

3. Method according to Claim 1 or 2, **characterized in that** the features (12) virtually marked in the working environment captured by the AR device (5) are positions and/or lines (11) and/or areas.

4. Method according to one of Claims 1 to 3, **characterized in that** the features (12) virtually marked in the working environment captured by the AR device (5) are driving paths for the industrial truck (1).

5. Method according to one of Claims 1 to 4, **characterized in that** the features (12) virtually marked in the working environment captured by the AR device (5) are areas with driving regulations for the industrial truck (1), in particular areas with one-way roads and/or speed-restricted areas and/or areas in which stopping is prohibited.

6. Method according to one of Claims 1 to 5, **characterized in that** the AR device (5) creates a two-dimensional or three-dimensional map of the surroundings in which it locates itself.

7. System for carrying out the method according to one of Claims 1 to 6 using a robotic and/or assistive system unit (2) of an industrial truck (1) for autonomous and/or partially automated operation of the industrial truck (1) in a working environment, there being provision for an AR device (5) for computer-aided expansion of the perception of reality (augmented reality device) that can be carried by an operator (4), comprising
- a detection unit (20) designed to capture the working environment,
- a user interface (25) designed to virtually mark features (12) in the working environment captured by the detection unit of the AR device (5),
- a communication interface (30) that can be used to connect the AR device (5) to the robotic and/or assistive system unit (2) of an industrial truck (1),
the AR device (5) being configured to use the communication interface (30) to provide, and to transmit to the robotic and/or assistive system unit (2) of an industrial truck (1), data that contain information about a capture of the working environment comprising a virtual marking so that the robotic and/or assistive system unit (2) of the industrial truck (1) can be set up using the information.

8. System according to Claim 7, **characterized in that** the detection unit (20) has a sensor system (7) for detecting the working environment and a data processing device (9) for evaluating the sensor data that is operatively connected to the sensor system (7),
further **characterized in that** the user interface (25) has a display apparatus (6) with an input function that is configured to display the working environment detected by the sensor system (7) and to input features (12) into the detected working environment by way of the operator (4),
further **characterized in that** the data processing device (9) is designed to use the communication interface (30) of the AR device (5) and a communication interface (31) of the robotic and/or assistive system unit (2) to make a signal-based pairing for data transmission with a data processing device (3) of the robotic and/or assistive system unit (2) of the industrial truck (1) and to provide, and to transmit to the data processing unit (3) of the robotic and/or assistive system unit (2) of the industrial truck (1), data that contain information about a capture of the working environment comprising the input features so that the data processing device (3) of the robotic and/or assistive system unit (2) of the industrial truck (1) can be set up using the information.

9. System according to Claim 7 or 8, **characterized in that** the communication interface (30) of the AR device (5) and/or optionally the communication interface (31) of the robotic and/or assistive system unit (2) of the industrial truck (1) are in the form of radio interfaces.

10. System according to one of Claims 7 to 9, **characterized in that** the sensor system (7) comprises a 2D camera or a 3D camera (8).

11. System according to one of Claims 8 to 10, **characterized in that** the display apparatus (6) comprises a touch-sensitive screen (15).

12. System according to one of Claims 7 to 11, **characterized in that** the AR device (5) is in the form of a smartphone or tablet or mixed reality glasses.

## Revendications

1. Procédé de configuration d'une unité système robotisée et/ou d'assistance (2) d'un chariot de manutention (1) pour le fonctionnement autonome et/ou partiellement automatisé du chariot de manutention (1) lors de la mise en service initiale dans un nouvel environnement de travail, un opérateur (4) muni d'un dispositif AR (5) destiné à l'augmentation assistée par ordinateur de la perception de la réalité (dispositif de réalité augmentée) capturant l'environnement de travail et identifiant virtuellement des caractéristiques (12) dans l'environnement de travail capturé par le dispositif AR (5), l'opérateur (4) identifiant virtuellement, en tant que caractéristiques (12), des zones de stockage dans lesquelles des marchandises doivent être prélevées et/ou délivrées par le chariot de manutention (1) dans l'environnement de travail capturé par le dispositif AR (5), et des informations concernant la capture de l'environnement de travail avec des identificateurs virtuels (13) étant transmises au chariot de manutention (1) et les informations étant utilisées dans l'unité système robotisée et/ou d'assistance (2) du chariot de manutention (1) lors d'un fonctionnement autonome et/ou partiellement automatisé dans l'environnement de travail.

2. Procédé selon la revendication 1, **caractérisé en ce que** la capture de l'environnement de travail avec les identificateurs virtuels (13) est traitée numériquement et/ou mémorisée dans un dispositif de traitement de données (9) du dispositif AR (5), et **en ce que** les informations concernant la capture de l'environnement de travail avec les identificateurs virtuels (13) sont transmises sous forme de données numériques par l'intermédiaire d'une liaison de données, en particulier d'une liaison de données sans fil, à un dispositif de traitement de données (3) de l'unité système robotisée et/ou d'assistance (2) du chariot de manutention (1), et **en ce que** le dispositif de traitement de données (3) de l'unité système robotisée et/ou d'assistance (2) du chariot de manutention (1) traite les données numériques et crée des instructions de travail à partir de celles-ci pour une commande de véhicule (10) du chariot de manutention (1).

3. Procédé selon la revendication 1 ou 2, **caractérisé en ce qu'**en tant que caractéristiques (12), des positions et/ou des lignes (11) et/ou des zones capturées par le dispositif AR (5) dans l'environnement de travail sont identifiées virtuellement.

4. Procédé selon l'une des revendications 1 à 3, **caractérisé en ce qu'**en tant que caractéristiques (12), des itinéraires pour le chariot de manutention (1) dans l'environnement de travail capturé par le dispositif AR (5) sont identifiés virtuellement.

5. Procédé selon l'une des revendications 1 à 4, **caractérisé en ce qu'**en tant que caractéristiques (12), des zones dotées de règles de conduite pour le chariot de manutention (1), en particulier des zones comprenant des routes à sens unique et/ou des zones à vitesse limitée et/ou des zones avec arrêt interdit, sont identifiées virtuellement dans l'environnement de travail capturé par le dispositif AR (5).

6. Procédé selon l'une des revendications 1 à 5, **caractérisé en ce que** le dispositif AR (5) crée une carte bidimensionnelle ou tridimensionnelle de l'environnement dans lequel il se localise.

7. Système pour la mise en œuvre du procédé selon l'une des revendications 1 à 6, comprenant une unité système robotisée et/ou d'assistance (2) d'un chariot de manutention (1) pour le fonctionnement autonome et/ou partiellement automatisé du chariot de manutention (1) dans un environnement de travail, un dispositif AR (5) pouvant être porté par un opérateur (4) et destiné à l'augmentation assistée par ordinateur de la perception de la réalité (dispositif de réalité augmentée) comprenant
- une unité de détection (20) configurée pour capturer l'environnement de travail,
- une interface utilisateur (25) conçue pour identifier virtuellement des caractéristiques (12) présentes dans l'environnement de travail capturé par l'unité d'acquisition du dispositif AR (5),
- une interface de communication (30) par l'intermédiaire de laquelle le dispositif AR (5) peut être relié à l'unité système robotisée et/ou d'assistance (2) d'un chariot de manutention (1),
le dispositif AR (5) étant configuré pour fournir des données par l'intermédiaire de l'interface de communication (30) et les transmettre à l'unité système robotisée et/ou d'assistance (2) d'un chariot de manutention (1), lesquelles données contiennent des informations concernant une capture de l'environnement de travail avec un identifiant virtuel, de telle sorte que l'unité système robotisée et/ou d'assistance (2) du chariot de manutention (1) peut être configurée avec lesdites informations.

8. Système selon la revendication 7, **caractérisé en ce que** l'unité de détection (20) dispose d'un système de capteurs (7) pour détecter l'environnement de travail et d'un dispositif de traitement de données (9) qui est en liaison fonctionnelle avec le système de capteurs (7) pour évaluer les données de capteurs,
**caractérisé en outre en ce que** l'interface utilisateur (25) dispose d'un dispositif d'affichage (6) doté d'une fonction de saisie, qui est configuré pour l'affichage de l'environnement de travail détecté par le système de capteurs (7) et pour la saisie par l'opérateur (4) de caractéristiques (12) présentes dans l'environnement de travail capturé,
**caractérisé en outre en ce que** le dispositif de traitement de données (9) est conçu pour établir, par l'intermédiaire de l'interface de communication (30) du dispositif AR (5) et d'une interface de communication (31) de l'unité système robotisée et/ou d'assistance (2),
un couplage par échange de signaux pour la transmission de données à un dispositif de traitement de données (3) de l'unité système robotisée et/ou d'assistance (2) du chariot de manutention (1), et pour fournir des données et les transmettre à l'unité de traitement de données (3) de l'unité système robotisée et/ou d'assistance (2) du chariot de manutention (1), lesquelles données contiennent des informations concernant une capture de l'environnement de travail avec les caractéristiques saisies, de telle sorte que le dispositif de traitement de données (3) de l'unité système robotisée et/ou d'assistance (2) du chariot de manutention (1) peut être configuré avec lesdites informations.

9. Système selon la revendication 7 ou 8, **caractérisé en ce que** l'interface de communication (30) du dispositif AR (5) et/ou le cas échéant l'interface de communication (31) de l'unité système robotisée et/ou d'assistance (2) du chariot de manutention (1) sont réalisées sous forme d'interfaces radio.

10. Système selon l'une des revendications 7 à 9, **caractérisé en ce que** le système de capteurs (7) comprend une caméra 2D ou une caméra 3D (8).

11. Système selon l'une des revendications 8 à 10, **caractérisé en ce que** le dispositif d'affichage (6) comprend un écran tactile (15).

12. Système selon l'une des revendications 7 à 11, **caractérisé en ce que** le dispositif AR (5) est réalisé sous forme de smartphone ou de tablette ou de lunettes de réalité mixte.
